# EUROPÄISCHE PATENTSCHRIFT

(11) **EP 1 151 895 B1**
(45) Veröffentlichungstag und Bekanntmachung des Hinweises auf die Patenterteilung: **14.04.2004**
(21) Anmeldenummer: 01110851.1
(22) Anmeldetag: 04.05.2001
(51) Int. Cl.: B60R 1/06

(54) **Rückblickspiegelanordnung, insbesondere als Aussenspiegel für Nutzfahrzeuge**
Rear view mirror, especially an exterior mirror for lorries
Rétroviseur, en particulier rétroviseur extérieur pour véhicules utilitaires

(30) Priorität: 05.05.2000 DE 10022016
(43) Veröffentlichungstag der Anmeldung: 07.11.2001
(73) Patentinhaber: MEKRA Lang GmbH & Co. KG, 90765 Fürth (DE)
(72) Erfinder: Lang, Heinrich, 91465 Ergersheim (DE); Popp, Albrecht, 91629 Weihenzell (DE)
(74) Vertreter: Winter, Brandl, Fürniss, Hübner, Röss, Kaiser, Polte Partnerschaft

(56) Entgegenhaltungen:
- WO-A-00/46072
- DE-A- 2 537 876
- DE-A- 2 703 105
- DE-A- 2 820 883
- DE-A- 19 530 913
- DE-C- 2 660 184
- FR-A- 2 633 568

## Beschreibung

Die Erfindung betrifft eine Rückblickspiegelanordnung insbesondere als Außenspiegel für Nutzfahrzeuge gemäß dem Oberbegriff des Anspruchs 1.

Derartige Außenspiegel sind in unterschiedlichsten Konstruktionen aus dem Stand der Technik bekannt. In einem Gehäuseteil, das in geeigneter Weise mit der Karosserie des Fahrzeugs verbunden ist, ist eine Spiegelscheibe angeordnet, die mittels eines Schwenkmechanismus zwischen ihr und dem Gehäuseteil relativ zum Gehäuse verstellbar gelagert ist. Das Gehäuseteil selbst ist in der Regel ein Spritzgußteil aus massivem Kunststoff, das meist als Wanne ausgebildet ist, in die weitere Spiegelbestandteile oder entsprechende Anbringungspunkte eingesetzt sind. Insbesondere für große LKW- und Omnibusspiegel werden oftmals als tragendes Element für den Außenspiegel Rohr- oder Plattenkonstruktionen verwendet, die direkt mit dem zur Karosserie führenden Spiegelhalter verbunden sind, wie dies beispielsweise aus der EP-A-0 590 510 bekannt ist. Das Gehäuseteil dient dann nur noch zur Abdeckung der Spiegelscheiben-Rückseite und der Schwenkmechanismen sowie zur aerodynamischen Verkleidung des Außenspiegels. Derartige Konstruktionen sind äußerst aufwendig und schwergewichtig.

Ein Problem dieser Rohr- und Plattenkonstruktionen besteht darin, daß vergleichsweise starke Vibrationen während des Betriebs des Fahrzeuges auftreten. Um diese starken Vibrtionen zu reduzieren, ist es aus der EP 0 865 967 A2 bekannt eine tragende Rohrstruktur mit einem geschäumten Formteil zu umgeben. Nachteilig hierbei ist es, dass die Gesamtkonstruktion vergleichsweise schwer ist.

Die WO 00/46072 A, die Stand der Technik gem. Art. 54(3) EPÜ ist, offenbart ein Spiegelgehäuse, bei dem ein Plastikformteil als dünnen Außenschale einem Schaumkern umschließt, der im wesentlichen die Stabililät der Struktur bestimmt. Zur Erzielung einer ausreichenden Stabilität sind zusätzliche Lastübertragungsmittel im Schaum eingebunden.

Die WO-A-0 046 072 die ebenfalls Stand der Technik gem. Art. 54(3) EPÜ ist, offenbart ferner eine Rückblickspiegelanordnung, insbesondere als Außenspiegel für Nutzfahrzeuge mit einem an einem Fahrzeug anbringbaren Träger und wenigstens einem an dem Träger befestigten oder in den Träger integrierten, vorzugsweise verstellbaren Spiegel, wobei der Träger ein aus einem Vorformling geblasener Kunstoffhohlkörper ist.

Eine sehr leichte Konstruktion, die sich für kleinere Spiegel eignet, ist aus der DE 44 29 604 A1 bekannt. Hierbei wurde die Rohrkonstruktion völlig weggelassen und das Schaumteil selbst ist als tragende Struktur ausgebildet. Hierzu wird insbesondere Gradientenschaum einstückig oder aus mehreren Schalen zusammengesetzt verwendet.

Ausgehend von der EP 0 865 967 A2 ist es daher Aufgabe der vorliegenden Erfindung, eine ausreichend stabile Rückblickspiegelanordnung anzugeben, die dennoch eine möglichst geringe Vibrationsanfälligkeit zeigt.

Die Lösung dieser Aufgabe erfolgt durch die Merkmale des Anspruchs 1.

Dadurch, daß als Träger ein aus einem Vorformling geblasener Kunststoffhohlkörper verwendet wird, ergibt sich eine sehr leichte Struktur, so daß selbst bei ausladenden Spiegel- bzw. Trägerstrukturen die Grundsteifigkeit des Kunststoffhohlkörpers eine ausreichende Stabilität gewährleistet. Es erschien zunächst problematisch, daß ein geblasener Kunststoffhohlkörper als Träger für eine Rückblickspiegelanordnung für Nutzfahrzeuge eine ausreichende Stabilität aufweisen würde. Durch die erhebliche Gewichstreduzierung sind jedoch auch die Anforderungen an die Stabilität gesunken, so daß sich herausgestellt hat, daß ein geblasener Kunststoffhohlkörper als Trägerstruktur für eine Rückblickspiegelanordnung tatsächlich eine ausreichende Stabilität bereitstellt.

Dadurch, daß der Vorformling mit unterschiedlichen Wandstärken hergestellt wird, läßt sich die Wandstärke des fertigen Trägers bzw. Kunststoffhohlkörpers gezielt steuern, so daß die Wandstärke des Kunststoffhohlkörpers an Stellen hoher Beanspruchung, zum Beispiel im Bereich der Verbindung mit dem Fahrzeug, groß ist, während sie in Bereichen geringer Belastung dünner ausgeführt ist. Auch läßt sich hierdurch eine gitterförmige Rippenstruktur an der Innenseite des Kunststoffhohlkörpers als Versteifungsstruktur erzeugen. (Anspruch 2)

Gemäß einer weiteren vorteilhaften Ausgestaltung der Erfindung umfaßt der Kunststoffhohlkörper eine Mehrzahl von Hohlräumen, die zum Beispiel durch Einlegeteile oder entsprechend ausgebildete Blasformen gebildet werden. Hierdurch wird zum einen die Stabilität zusätzlich erhöht, und zum anderen läßt sich in diese in ganz bestimmte Hohlräume gezielt Füllmasse einfüllen. (Anspruch 3)

Gemäß einer weiteren vorteilhaften Ausgestaltung der Erfindung ist der Kunststoffhohlkörper mehrschichtig aufgebaut, wodurch zum einen eine erhöhte Stabilität erreicht wird, und zum anderen lassen sich damit Außenschichten vorsehen, die besonders glatt sind und/oder sich besonders gut lackieren lassen. (Anspruch 4)

Gemäß einer weiteren vorteilhaften Ausgestaltung der Erfindung läßt sich in den oder die Hohlräume zusätzlich eine Versteifungsstruktur einbringen, wodurch die Stabilität des Trägers weiter erhöht wird. (Anspruch 5)

Gemäß einer weiteren vorteilhaften Ausgestaltung der Erfindung besteht die Füllmasse in den Hohlräumen aus Kunststoffschaum, wie PU-Schaum, Gradientenschaum, Mehrkomponenten-Hartschaum etc., der sich fest mit den Innenwandungen der Hohlräume verbindet und somit die Stabilität des Trägers erhöht. Darüber hinaus kann durch geeignete Dichtewahl des Schaums oder durch dessen Weichheit das Schwingungsverhalten des Trägers günstig beeinflußt werden, so daß an Nutzfahrzeugen unweigerlich auftretende Vibrationen stark gedämpft werden und folglich weniger Verschleiß entsteht. (Anspruch 7)

Zusätzlich oder alternativ läßt sich in ein Teil der Hohlräume oder in andere Hohlräume ein zähflüssige Masse, insbesondere ein Gel oder eine gallertartige Füllmasse einfüllen, um damit ebenfalls das Schwingungs- und Dämpfungsverhalten gezielt zu beeinflussen. (Anspruch 8)

Gemäß einer weiteren vorteilhaften Ausgestaltung der Erfindung läßt sich in die Hohlräume zusätzlich oder alternativ Granulat und/oder Sand einfüllen. Hierbei kann die Füllmasse ausschließlich aus Sand oder Granulat oder einer Mischung davon oder als Beimischung zu dem Gel, der Gallertmasse oder dem Schaum bestehen. Auch hierdurch wird zum einen die Stabilität positiv beeinflußt, und zum anderen läßt sich das Schwingungs- und Dämpfungsverhalten gezielt beeinflussen. (Anspruch 9)

Weitere Einzelheiten, Merkmale und Vorteile der Erfindung ergeben sich aus der nachfolgenden Beschreibung einer bevorzugten Ausführungsform der Erfindung anhand der Zeichnung.

Es zeigt:
Fig. 1A eine schematische Darstellung einer ersten Ausführungsform der Erfindung mit einem Träger in Form eines geblasenen Kunststoffhohlkörpers mit einem einzigen durchgehenden Hohlraum,
Fig. 1B einen Schnitt entlang der Linie A-A in Fig. 1A,
Fig. 2A eine perspektivische Ansicht einer zweiten Ausführungsform der Erfindung mit einem Rückblickspiegel, der einen Träger in Form von zwei Trägerarmen aufweist, der einen Träger mit zwei Trägerarmen aufweist,
Fig. 2B eine Schnittdarstellung der Ausführungsform nach Fig. 2A,
Fig. 3 eine dritte Ausführungsform der Erfindung mit einem Träger in Form eines Kunststoffhohlkörpers mit einer Mehrzahl von Hohlräumen, und
Fig. 4 eine vierte Ausführungsform der Erfindung mit einem Träger aus einem geblasenen Kunststoffhohlkörper mit zusätzlicher Versteifungsstruktur.

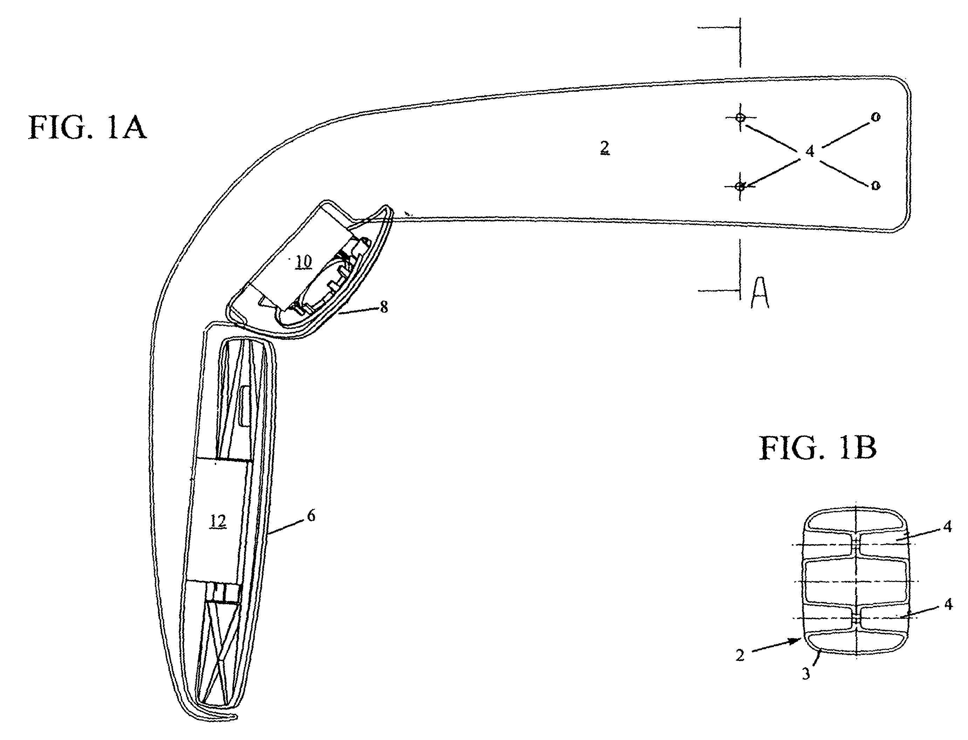

Die Figuren 1A und 1B zeigen schematisch eine erste Ausführungsform der Erfindung. Die Rückblickspiegelanordnung umfaßt einen Träger 2 in Form eines aus einem extrudierten Vorformling geblasenen Kunststoffhohlkörpers 2 mit einer geschlossenen Wand 3. Am fahrzeugseitigen Ende des Kunststoffhohlkörpers 2 sind Schraublöcher 4 vorgesehen, um die Träger 2 bzw. die Rückblickspiegelanordnung mit einem Fahrzeug zu verbinden. An dem von dem Fahrzeug abgewandten Ende des Kunststoffhohlkörpers 2 ist in den entsprechenden Ausnehmungen ein erster Spiegel 6 und ein zweiter Spiegel 8 montiert. Beide Spiegel 6 und 8 umfassen einen Verstellmechanismus 10 bzw. 12, mittels dem sie an dem Kunststoffhohlkörper 2 montiert sind. Die Wand 3 des Kunststoffhohlkörpers 2 ist an Stellen hoher Belastung dicker als an Stellen mit geringerer Belastung (nicht dargestellt).

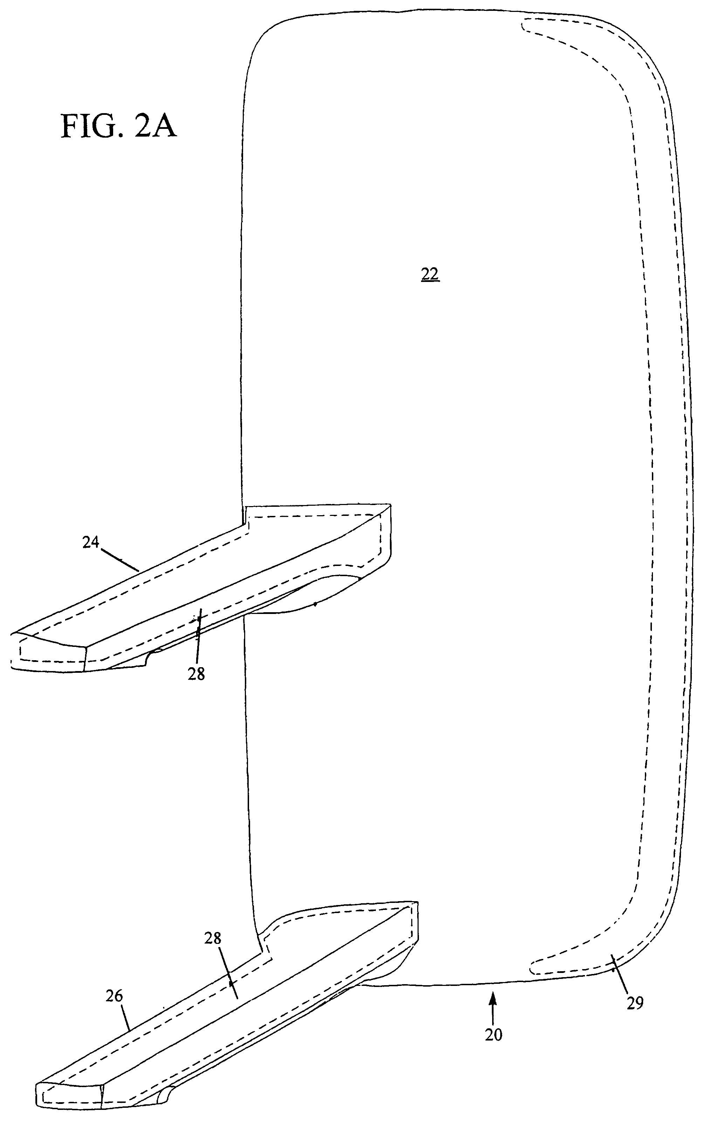

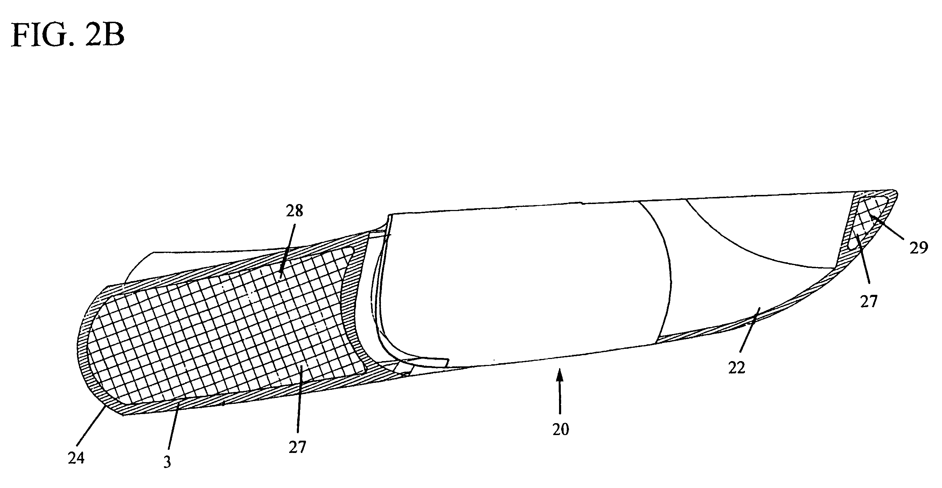

Die Figuren 2A und 2B zeigen eine zweite Ausführungsform der Erfindung mit einem Träger 20 in Form eines Kunststoffhohlkörpers. Der Kunststoffhohlkörper 20 umfaßt ein schalenförmiges Spiegelgehäuse 22 und zwei mit diesem Spiegelgehäuse 22 einstückig verbundene Trägerarme 24 und 26. Die beiden Trägerarme 24 und 26 sind hohl und weisen jeweils einen Hohlraum 28 auf, der mit Füllmasse 27 ausgeschäumt ist. Als Füllmasse 27 wird vorzugsweise PU-Schaum, Gradientenschaum, Mehrkomponentenschaum usw. verwendet. Der Träger 20 umfaßt an dem vom Fahrzeug abgewandten Ende des Spiegelgehäuses 22 einen weiteren Hohlraum 29, der ebenfalls ausgeschäumt ist. Durch das Ausschäumen der Hohlräume 28 und 29 wird zum einen die Stabilität verbessert, da sich der Schaum in den Hohlräumen 28 und 29 mit der Innenwandung verbindet bzw. an dieser haftet, und zum anderen wird durch das Ausschäumen das Schwingungsverhalten positiv beeinflußt, d.h. Vibrationen gedämpft.

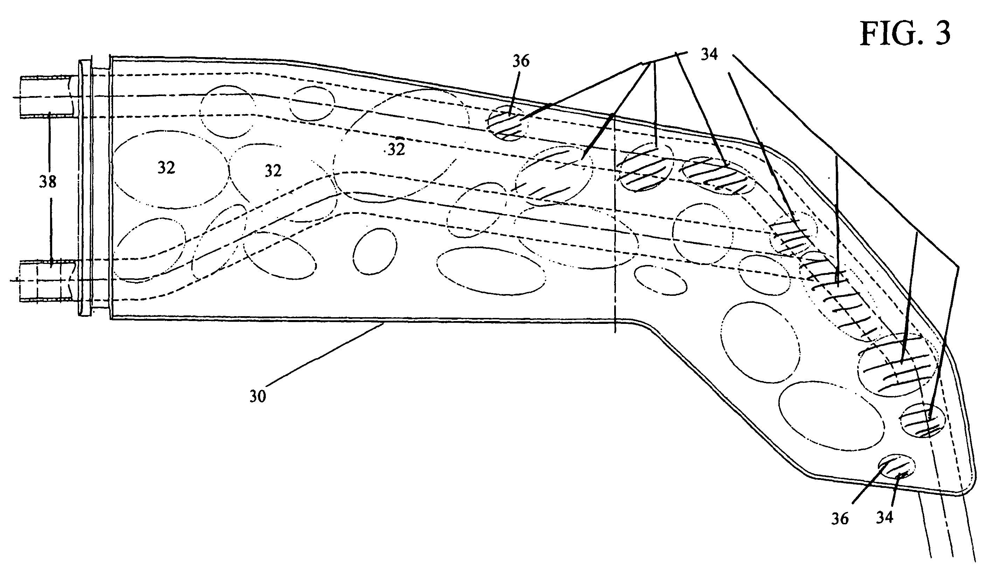

Fig. 3 zeigt eine dritte Ausführungsform der Erfindung mit einem Träger 30 in Form eines Kunststoffhohlkörpers, wobei der Kunststoffhohlkörper eine Vielzahl von blasenförmigen Hohlräumen 32 und 34 aufweist, wobei die blasenförmigen Hohlräume 32 leer sind während die blasenförmigen Hohlräume 34 mit einer Füllmasse 36 wenigstens teilweise gefüllt sind. Durch die Mehrzahl der Hohlräume 32, 34 wird zum einen das Gewicht reduziert und zusätzlich wird durch die Wandungen zwischen den Hohlräumen 32, 34 die Stabilität erhöht. Durch das Füllen eines Teils der Hohlräume, nämlich der Hohlräume 34 mit Füllmasse 36 läßt sich wiederum das Schwingungsverhalten gezielt derart beeinflussen, daß weniger Vibrationen auftreten, bzw. daß die Vibrationen gedämpft werden. Zusätzlich sind bei der dritten Ausführungsform noch Trägerrohre 38 aus Metall vorgesehen, durch die die Stabilität des Trägers 30 zusätzlich erhöht wird.

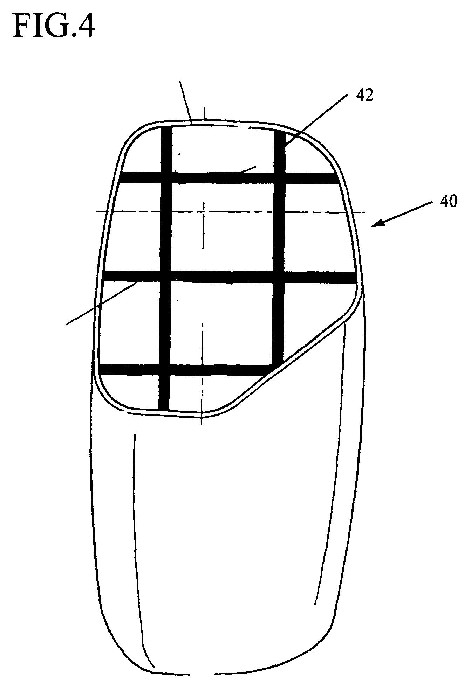

Fig. 4 zeigt eine vierte Ausführungsform der Erfindung mit einem Träger 40 in Form eines Kunststoffhohlkörpers, bei dem an der Innenwandung des Kunststoffhohlkörpers 40 gitterförmige Versteifungsrippen 42 vorgesehen sind. Diese gitterförmigen Versteifungsrippen 42 lassen sich durch entsprechende unterschiedliche Wandstärken des Vorformlings vor dem Aufblasen des Vorformlings in der Blasform bereitstellen. Durch die gitterförmigen Versteifungsrippen 42 wird die Stabilität erhöht.

### Bezugszeichenliste:

- 2: Träger, Kunststoffhohlkörper
- 3: Wand von 2
- 4: Schraublöcher
- 6: erster Spiegel
- 8: zweiter Spiegel
- 10: Verstellmechanismus erster Spiegel
- 12: Verstellmechanismus zweiter Spiegel

- 20: Träger, Kunststoffhohlkörper
- 22: Spiegelgehäuse
- 24: oberer Trägerarm
- 26: unterer Trägerarm
- 27: Füllmasse
- 28: Hohlraum in 24, 26
- 29: Hohlraum in 22

- 30: Träger, Kunstoffhohlkörper
- 32: blasenförmige Hohlräume in 30, leer
- 34: blasenförmige Hohlräume in 30, gefüllt
- 36: Füllmasse
- 38: Trägerrohre

- 40: Träger, Kunstoffhohlkörper
- 42: Versteifungsrippen

## Patentansprüche

1. Rückblickspiegelanordnung, insbesondere als Außenspiegel für Nutzfahrzeuge mit
einem an einem Fahrzeug anbringbaren Träger (2; 20; 30; 40), und
wenigstens einem an dem Träger (2; 20; 30; 40) befestigten oder in den Träger (2; 20; 30; 40) integrierten, vorzugsweise verstellbaren Spiegel (6, 8),
wobei der Träger (2; 20; 30; 40) ein aus einem Vorformling geblasener Kunstoffhohlkörper ist, wobei der Kunstoffhohlkörper eine Festigkeit aufweist, die eine ausreichende Stabilität der Rückspiegelanordnung gewährleistet.

2. Rückblickspiegelanordnung nach Anspruch 1, **dadurch gekennzeichnet, dass** der Vorformling und/oder der Kunstoffhohlkörper (2; 20; 30; 40) unterschiedliche Wandstärken aufweisen.

3. Rückblickspiegelanordnung nach Anspruch 1 oder 2, **dadurch gekennzeichnet, dass** der Kunststoffhohlkörper (2; 20; 30; 40) eine Mehrzahl von Hohlräumen (28, 29; 32, 34) umfaßt.

4. Rückblickspiegelanordnung nach einem der vorhergehenden Ansprüche, **dadurch gekennzeichnet, dass** der Kunstoffhohlkörper (2; 20; 30; 40) mehrschichtig ist.

5. Rückblickspiegelanordnung nach einem der vorhergehenden Ansprüche, **dadurch gekennzeichnet, dass** in den wenigstens einen Hohlraum eine Versteifungsstruktur (38; 42) eingebracht ist.

6. Rückblickspiegelanordnung nach einem der vorhergehenden Ansprüche, **dadurch gekennzeichnet, dass** der oder die Hohlräume (28, 29; 32, 34) wenigstens teilweise mit einer Füllmasse (27; 36) gefüllt sind.

7. Rückblickspiegelanordnung nach Anspruch 6, **dadurch gekennzeichnet, dass** die Füllmasse (27; 36) ein Kunststoffschaum, insbesondere Gradientenschaum, Mehrkomponenten-Hartschaum oder PU-Schaum ist.

8. Rückblickspiegelanordnung nach Anspruch 6, **dadurch gekennzeichnet, dass** die Füllmasse (27; 36) eine zähflüssige Masse, insbesondere Gel oder Galert ist.

9. Rückblickspiegelanordnung nach einem der vorhergehenden Ansprüche 6 bis 8, **dadurch gekennzeichnet, dass** die Füllmasse (27; 36) Granulat, insbesondere Kunststoffgranulat, und/oder Sand enthält.

10. Rückblickspiegelanordnung nach einem der vorhergehenden Ansprüche 6 bis 8, **dadurch gekennzeichnet, dass** die Füllmasse (27; 36) eine Mischung aus Gel und Granulat umfaßt.

## Claims

1. A rearview mirror arrangement, in particular as an outside mirror for commercial vehicles, comprising a carrier (2; 20; 30; 40) for mounting on a vehicle, and
at least one - preferably adjustable - mirror (6, 8) affixed to the carrier (2; 20; 30; 40) or integrated into the carrier (2; 20; 30; 40),
wherein the carrier (2; 20; 30; 40) is a hollow plastic body blow-molded from a preform, said hollow plastic body having a strength ensuring a sufficient stability of the rearview mirror arrangement.

2. A rearview mirror arrangement in accordance with claim 1, **characterized in that** the preform and/or the hollow plastic body (2; 20; 30; 40) have different wall thicknesses.

3. A rearview mirror arrangement in accordance with claim 1 or 2, **characterized in that** the hollow plastic body (2; 20; 30; 40) includes a plurality of cavities (28, 29; 32, 34).

4. A rearview mirror arrangement in accordance with any one of the preceding claims, **characterized in that** the hollow plastic body (2; 20; 30; 40) is multilayered.

5. A rearview mirror arrangement in accordance with any one of the preceding claims, **characterized in that** a stiffening structure (38; 42) is incorporated into the at least one cavity.

6. A rearview mirror arrangement in accordance with any one of the preceding claims, **characterized in that** the cavity or cavities (28, 29; 32, 34) are at least partly filled with a filler material (27; 36).

7. A rearview mirror arrangement in accordance with claim 6, **characterized in that** the filler material (27; 36) is a synthetic foam, in particular gradient foam, multi-component high-resistance foam, or PU foam.

8. A rearview mirror arrangement in accordance with claim 6, **characterized in that** the filler material (27; 36) is a viscous mass, in particular gel or gelatin.

9. A rearview mirror arrangement in accordance with any one of the preceding claims 6 to 8, **characterized in that** the filler material (27; 36) contains granulate, in particular plastic granulate, and/or sand.

10. A rearview mirror arrangement in accordance with any one of the preceding claims 6 to 8, **characterized in that** the filler material (27; 36) comprises a mixture of gel and granulate.

## Revendications

1. Rétroviseur, en particulier rétroviseur extérieur pour véhicules utilitaires, avec
un support (2 ; 20 ; 30 ; 40) pouvant être placé sur un véhicule et
au moins un miroir (6 ; 8) fixé sur le support (2 ; 20 ; 30 ; 40) ou intégré dans le support (2 ; 20 ; 30 ; 40), réglable de préférence
le support (2 ; 20 ; 30 ; 40) étant un corps creux en plastique soufflé à partir d'une ébauche, le corps creux en plastique comportant une résistance qui garantit une stabilité suffisante du rétroviseur.

2. Rétroviseur selon la revendication 1, **caractérisé en ce que** l'ébauche et/ou le corps creux en plastique (2 ; 20 ; 30 ; 40) comportent différentes épaisseurs de paroi.

3. Rétroviseur selon la revendication 1 ou 2, **caractérisé en ce que** le corps creux en plastique (2 ; 20 ; 30 ; 40) comprend une multitude d'espaces creux (28 ; 29 ; 32 ; 34).

4. Rétroviseur selon l'une quelconque des revendications précédentes, **caractérisé en ce que** le corps creux en plastique (2 ; 20 ; 30 ; 40) comporte plusieurs couches.

5. Rétroviseur selon l'une quelconque des revendications précédentes, **caractérisé en ce qu'**une structure de renforcement (38 ; 42) est amenée dans au moins un espace creux.

6. Rétroviseur selon l'une quelconque des revendications précédentes, **caractérisé en ce que** le ou les espaces creux (28 ; 29 ; 32 ; 34) sont remplis au moins partiellement d'une masse de remplissage (27 ; 36).

7. Rétroviseur selon la revendication 6, **caractérisé en ce que** la masse de remplissage (27 ; 36) est une mousse synthétique, en particulier une mousse à gradient d'indice, une mousse dure à plusieurs constituants ou une mousse PU.

8. Rétroviseur selon la revendication 6, **caractérisé en ce que** la masse de remplissage (27 ; 36) est une masse visqueuse, en particulier du gel ou de la gélatine.

9. Rétroviseur selon l'une quelconque des revendications précédentes 6 à 8, **caractérisé en ce que** la masse de remplissage (27 ; 36) contient du granulat, en particulier du granulat synthétique et/ou du sable.

10. Rétroviseur selon l'une quelconque des revendications précédentes 6 à 8, **caractérisé en ce que** la masse de remplissage (27 ; 36) comprend un mélange de gel et de granulat.
